# EUROPÄISCHE PATENTSCHRIFT

(11) **EP 3 902 731 B1**
(45) Veröffentlichungstag und Bekanntmachung des Hinweises auf die Patenterteilung: **21.06.2023**
(21) Anmeldenummer: 20704412.4
(22) Anmeldetag: 27.01.2020
(51) Int. Cl.: B61D 37/00, B60N 3/00, A47B 5/06

(54) **VORRICHTUNG ZUM ANBINDEN EINES TISCHES AN EINE SEITENWAND EINES SCHIENENFAHRZEUGS UND SCHIENENFAHRZEUG**
APPARATUS FOR CONNECTING A TABLE TO A SIDE WALL OF A RAIL VEHICLE, AND RAIL VEHICLE
DISPOSITIF POUR ATTACHER UNE TABLE À UNE PAROI LATÉRALE D'UN VÉHICULE FERROVIAIRE ET VÉHICULE FERROVIAIRE

(30) Priorität: 26.02.2019 DE 102019202593
(43) Veröffentlichungstag der Anmeldung: 03.11.2021
(73) Patentinhaber: Siemens Mobility GmbH, 81739 München (DE)
(72) Erfinder: SCHMIDT, Gerhard, 45127 Essen (DE)
(74) Vertreter: Siemens Patent Attorneys
(86) Internationale Anmeldenummer: PCT/EP2020/051854
(87) Internationale Veröffentlichungsnummer: WO 2020/173634

(56) Entgegenhaltungen:
- EP-A1- 1 067 035
- EP-A1- 1 195 307
- WO-A1-2011/009679
- CN-U- 205 589 235

## Beschreibung

Die Erfindung betrifft eine Vorrichtung zum Anbinden eines Tisches an eine Seitenwand eines Schienenfahrzeugs für eine quer zur Fahrtrichtung angeordnete Sitzgruppe nach dem Oberbegriff der Ansprüche 1 und 2. Die Erfindung betrifft ferner ein Schienenfahrzeug mit einer solchen Vorrichtung.

Eine solche Vorrichtung zum Anbinden eines Tisches an eine Seitenwand eines Schienenfahrzeugs ist aus der WO 2011 /009679 A1 bekannt. Eine weitere Ausführungsform einer solchen Vorrichtung ist in der CN 205 589 235 U offenbart. Schienenfahrzeuge zur Beförderung von Personen weisen in der Regel Sitzgruppen aus gegenüberliegenden, quer zur Fahrtrichtung angeordneten Sitzen auf, zwischen denen häufig ein fest installierter Tisch angeordnet ist. Solche Tische müssen die Beanspruchungen des Betriebs sowie definierten außergewöhnlichen Lasten (z.B. Vandalismus) ohne Beschädigung aushalten. Bei Kollisionen der Schienenfahrzeuge mit Hindernissen und daraus resultierenden hohen Längsverzögerungen treten durch den Aufprall der Insassen an der Tischkante deutlich höhere Lasten auf. Die Befestigung des Tisches im Schienenfahrzeug soll dabei die Bewegung des Tisches so begrenzen, dass der Überlebensraum der gegenüber, d.h. mit den Rücken zu Fahrtrichtung sitzenden, Insassen nicht beeinträchtigt wird. Andererseits ist eine kontrollierte Nachgiebigkeit der Tischkante vorteilhaft für die Begrenzung der Aufprallkräfte zur Vermeidung oder Reduktion von Verletzungen.

Eine Aufgabe der vorliegenden Erfindung besteht darin, eine Vorrichtung zum Anbinden eines Tisches an eine Seitenwand eines Schienenfahrzeugs zu schaffen, die eine sichere und zuverlässige Stützstruktur bereitstellt, welche insbesondere eine Verletzungsgefahr für Fahrgäste im Betrieb eines Schienenfahrzeugs gering hält.

Die Aufgabe wird durch eine Vorrichtung und ein Schienenfahrzeug mit den Merkmalen des jeweiligen unabhängigen Patentanspruchs gelöst. Vorteilhafte Ausgestaltungen der Vorrichtung sind in den abhängigen Patentansprüchen angegeben.

Gemäß einem Aspekt der Erfindung weist eine Vorrichtung zum Anbinden eines Tisches an eine Seitenwand eines Schienenfahrzeugs eine Tischplatte, eine erste Anbindungskomponente und eine zweite Anbindungskomponente auf. Die erste Anbindungskomponente bildet eine Stützstruktur unterhalb einer Oberseite der Tischplatte aus, deren oberes Ende an der Tischplatte befestigt ist und deren unteres Ende an der Seitenwand des Schienenfahrzeugs befestigbar ist. Die erste Anbindungskomponente umfasst zwei Pfosten, die aufrecht voneinander beabstandet angeordnet sind und jeweils einen unteren, ersten Gelenkbereich und einen oberen, zweiten Gelenkbereich aufweisen, die um eine jeweilige Schwenkachse verschwenkbar sind. Die Schwenkachsen sind bezogen auf einen an der Seitenwand angeordneten Zustand der Vorrichtung jeweils quer zu einer Fahrtrichtung des Schienenfahrzeugs orientiert. Die Schwenkachsen der oberen und unteren Gelenkbereiche der Pfosten sind so gegeneinander gedreht, dass sie sich in einer vertikalen Drehachse schneiden, die bezogen auf eine Querrichtung quer zu der Seitenwand näher an einer Fahrzeugmitte des Schienenfahrzeugs liegt als an der Seitenwand. Die zweite Anbindungskomponente ist beabstandet von der ersten Anbindungskomponente an der Tischplatte befestigt und dazu ausgebildet, die Tischplatte mit der Seitenwand zu koppeln, sodass bezogen auf einen an der Seitenwand angeordneten Zustand der Vorrichtung bei einem Auftreten einer in Fahrtrichtung des Schienenfahrzeugs auf die Tischplatte wirkenden Kraft ein Drehmoment mittels der ersten Anbindungskomponente und der zweiten Anbindungskomponente unabhängig voneinander an die Seitenwand überleitbar ist.

Gemäß einem weiteren Aspekt der Erfindung umfasst eine Vorrichtung zum Anbinden eines Tisches an eine Seitenwand eines Schienenfahrzeugs eine Tischplatte, eine erste und eine zweite Anbindungskomponente. Die erste Anbindungskomponente dient als Stützstruktur und ist unterhalb einer Oberseite der Tischplatte angeordnet, deren oberes Ende an der Tischplatte befestigt ist und deren unteres Ende an der Seitenwand des Schienenfahrzeugs befestigbar ist. Die erste Anbindungskomponente umfasst zwei Pfosten, die aufrecht voneinander beabstandet angeordnet sind und jeweils einen unteren Gelenkbereich und einen oberen Gelenkbereich aufweisen, die um eine jeweilige Schwenkachse verschwenkbar sind. Die Schwenkachsen sind bezogen auf einen an der Seitenwand angeordneten Zustand der Vorrichtung quer zu einer Fahrtrichtung des Schienenfahrzeugs orientiert. Die Pfosten sind bezogen auf eine jeweilige Längsachse an den jeweiligen unteren Gelenkbereichen schmaler ausgeführt als an den oberen Gelenkbereichen. Die zweite Anbindungskomponente umfasst ein Tischbein, das beabstandet von der ersten Anbindungskomponente aufrecht angeordnet an der Tischplatte befestigt ist und dazu ausgebildet ist, die Tischplatte mit einem Boden des Schienenfahrzeugs zu koppeln, sodass bezogen auf einen an der Seitenwand angeordneten Zustand der Vorrichtung bei einem Auftreten einer in Fahrtrichtung des Schienenfahrzeugs auf die Tischplatte wirkenden Kraft ein Drehmoment mittels der ersten Anbindungskomponente und der zweiten Anbindungskomponente unabhängig voneinander an die Seitenwand und den Boden überleitbar ist.

Mittels der beschriebenen Vorrichtungen ist jeweils eine sichere und zuverlässige Stützstruktur zur Seitenwandanbindung eines Tisches für eine quer zur Fahrtrichtung angeordnete Sitzgruppe eines Schienenfahrzeugs realisierbar, die mit hoher Stabilität die Verletzungsgefahr der Fahrgäste im Betrieb, insbesondere bei Kollisionen, deutlich vermindert, ohne dass Komforteinbußen hingenommen werden müssen. Die Vorrichtungen sind gemäß ihrem jeweiligen Aufbau so ausgebildet, dass Kräfte bzw. Drehmomente, die auf den Tisch bzw. an der Tischplatte wirken, durch die beiden Anbindungskomponenten zuverlässig aufgenommen und sicher abgeleitet werden.

Es ist eine Erkenntnis im Zusammenhang mit der vorliegenden Erfindung, dass Tische, insbesondere von Schienenfahrzeugen, die quer zu der Fahrtrichtung eines Schienenfahrzeugs angeordnet werden, bei einem Sekundäraufprall im Fall von Kollisionen ein erhebliches Verletzungsrisiko für die Fahrgäste darstellen. Die beschriebenen Vorrichtungen stellen daher mittels einer jeweils nachgiebigen Befestigung der in sich starren Tischplatte eine gezielte Nachgiebigkeit der Tischplatte zur Begrenzung der Kräfte bereit. Eine Dimensionierung ergibt sich bei einer an der Seitenwand befestigten Tischplatte daraus, dass bei weit von der Seitenwand entfernten Aufprallpositionen große Biegemomente aufzunehmen sind, bei näher an der Seitenwand liegenden Aufprallpositionen dennoch die Kräfte zu begrenzen sind. Die beschriebenen Vorrichtungen ermöglichen jeweils mittels Gelenkgetriebe eine zuverlässige und sichere Aufnahme von solchen Biegemomenten und tragen zudem zu einem übersichtlichen und platzsparenden Aufbau bei. Mittels einer Verwendung einer der beschriebenen Vorrichtungen ist zur sicheren Kraftaufnahme keine breite Tischplatte erforderlich und auch voluminöse Säulen zur Aufnahme von Gelenkgetrieben können eingespart werden. Die Vorrichtungen ermöglichen jeweils eine sichere und komfortable Anordnung der Tischplatte an der Seitenwand, die einen großzügigen Freiraum für Beine eines Fahrgastes unterhalb der Tischplatte bereitstellt.

Die Vorrichtungen weisen jeweils zwei in Fahrzeuglängsrichtung oder Fahrtrichtung beabstandet angeordnete Pfosten auf, die zum Befestigen der Vorrichtung an einer Seitenwand eines Wagenkastens eines Schienenfahrzeugs eingerichtet sind, und die so ausgebildet und angebunden sind, dass sie in einer Fahrzeugquerrichtung kontrolliert Kräfte aufnehmen können. Die beabstandeten wirkenden Querkräfte bilden ein Moment um eine Hochachse zu der Abstützung, der von der Seitenwand entfernt wirkenden Aufprallkräfte der Fahrgäste. Die jeweilige Vorrichtung mit entsprechend gestalteten Pfosten bewirkt somit in einem Kollisionsfall eines Schienenfahrzeugs, also wenn zum Beispiel ein Fahrgast gegen die Tischkante geschleudert wird, eine kontrollierte Bewegung der Tischplatte auf einer durch die Pfostengestaltung erzwungenen Kreisbahn in Längsrichtung des Schienenfahrzeugs. Eine solche geführte Kreisbewegung der Tischplatte kann für einen erwünschten Deformationsweg im Fall einer Kollision genutzt werden.

In dieser Beschreibung beziehen sich Begriffe, wie "oben", "unten", "Oberseite", "Unterseite", "Fahrtrichtung", "Querrichtung", auf eine Ausrichtung der jeweiligen Vorrichtung hinsichtlich eines betriebsgemäß angeordneten und einsatzbereiten Zustands an einer Seitenwand eines Schienenfahrzeugs. Somit bilden zum Beispiel die aufrecht angeordneten Pfosten vertikale Stützelemente aus, während sich die Tischplatte im Wesentlichen in einer horizontalen Ebene quer zu der Seitenwand und parallel zu dem Boden des Schienenfahrzeugs erstreckt. Dabei ist die Vorrichtung dazu vorgesehen, an der Seitenwand des Schienenfahrzeugs angebunden zu werden. Das Schienenfahrzeug mit einer darin angeordneten Vorrichtung bildet einen nachfolgenden Systemanspruch aus.

Die Pfosten besitzen jeweils an der Tischplatte gelenkig bewegliche obere Bereiche, die um eine jeweilige in Querrichtung des Schienenfahrzeugs orientierte Achse verschwenkbar sind. Entsprechende Schwenkachse sind auch an gelenkig beweglichen unteren Bereichen der jeweiligen Pfosten ausgebildet, die mittels einer jeweiligen Seitenwandanbindung mit der Seitenwand des Schienenfahrzeugs verbunden werden.

Mittels der zweiten Anbindungskomponente ist zusätzlich zu den beiden Pfosten eine weitere Anbindung der Tischplatte vorhanden, die in einer Querebene des Schienenfahrzeugs eine Kraft aufbringen bzw. aufnehmen kann, deren Wirklinie zu einer Verbindungsgeraden der beiden unteren Gelenkbereiche der Pfosten beabstandet ist. Die Einführung einer zusätzlichen Abstützung ermöglicht es, die Drehmomentbeanspruchung der unteren Anbindungen der Pfosten an den unteren Gelenkbereichen so zu reduzieren, dass diese deutlich schmaler oder schlanker ausgeführt werden können als die Anbindungen der Pfosten an den oberen Gelenkbereichen. Damit nehmen die oberen Anbindungen der Pfosten überwiegend oder vollständig die sich aus den Kräften in Querrichtung des Schienenfahrzeugs ergebenden Versatzmomente auf. Eine entsprechend tragfähige und stabile Dimensionierung der oberen plastischen Gelenkbereiche, die im Bereich der Tischplatte angeordnet werden können, ist unproblematisch und wirkt sich üblicherweise nicht nachteilig auf den Komfort und zur Verfügung stehenden Beinfreiraum aus.

Aufgrund eines kleinen Hebelarms wird gegebenenfalls ein relativ großes Kräftepaar zur Abstützung bzw. Aufnahme eines Drehmoments um eine Hochachse der Vorrichtung benötigt und durch die Pfosten und deren kräftigen oberen Gelenkbereiche bereitgestellt. Ein solches Drehmoment resultiert zum Beispiel aus Längskräften bei einer Kollision des Schienenfahrzeugs. Die zusätzliche Abstützung wird dabei nur durch wesentlich kleinere Quer- und Vertikalkräfte belastet. Somit wird ein baulicher Aufwand der Vorrichtung gering gehalten und dennoch eine zuverlässige und sichere Tischbewegung bei einer Kollision ermöglicht.

Gemäß der beschriebenen Vorrichtungen mit der zusätzlichen zweiten Anbindungskomponente werden die unteren Gelenkbereiche bei einer Kollision deutlich weniger belastet und müssen signifikant geringere Drehmomente aufnehmen, die zum Beispiel durch senkrecht zu der Seitenwand auf die Tischplatte wirkende Kräfte entstehen. Somit können sie wesentlich schmaler ausgeführt werden als die oberen Gelenkbereiche der Pfosten. Die zweite Anbindungskomponente bildet daher eine weitere, von dem unteren Gelenkbereich der Pfosten unabhängige, Abstützung der um die Fahrzeuglängsachse wirkenden Momente aus.

Gemäß einer besonders einfachen Ausführungsform kann die weitere Anbindung als ein Tischbein unter der Tischplatte realisiert sein.

Gemäß einer bevorzugten Weiterbildung der jeweiligen Vorrichtung weist die zweite Anbindungskomponente ein Lenkerelement auf, das dazu eingerichtet ist, die Tischplatte gelenkig mit der Seitenwand zu koppeln. Die zweite Anbindungskomponente realisiert zum Beispiel ein in Fahrzeuglängsrichtung bzw. in Fahrtrichtung bewegliches Getriebe. Das Lenkerelement kann in einer besonders einfachen Ausführung als eine Seilverbindung zwischen der Tischplatte und der Seitenwand realisiert sein. Vorzugsweise ist das Lenkerelement als Metall- oder Blechkomponente ausgebildet und realisiert ein abstützendes Getriebe, das in oder nahe der Tischplatte zwischen der Tischplatte und der Seitenwand verläuft.

Bevorzugt weist das Lenkerelement in einer Ausführungsform eines Bleches eine oder mehrere Knicklinien und/oder Versteifungen auf, die ein kontrolliertes plastisches Nachgeben und Übertragen von Drehmomenten ermöglichen.

Gemäß einer weiteren bevorzugten Weiterbildung der Vorrichtung weist die zweite Anbindungskomponente ein Führungselement auf, das dazu eingerichtet ist, im Zusammenwirken mit einer zweiten Seitenwandanbindung an der Seitenwand eine Linearführung der Tischplatte relativ zu der Seitenwand auszubilden. Zum Beispiel ist das Führungselement als eine längliche Ausnehmung an der Tischplatte ausgebildet, die zur Aufnahme eines vorspringenden Bereichs der zweiten Seitenwandanbindung eingerichtet ist. Eine solche längliche Ausnehmung kann sich in Fahrtrichtung durch die gesamte Tischbreite der Tischplatte erstrecken oder alternativ nur abschnittsweise an der Tischplatte ausgebildet sein. Vorzugsweise ist die Ausnehmung an der Unterseite der Tischplatte ausgebildet, in die beispielsweise ein nach oben gerichteter Haken der zweiten Seitenwandanbindung eingreift. Auf diese Weise kann eine geführte Bewegung der Tischplatte bei eine Kollision eingerichtet werden.

Eine Linearführung als abstützendes Getriebe kann auch zwischen der Seitenwand und einer horizontalen Traverse ausgebildet sein, die zum Beispiel unterhalb der Tischplatte angeordnet und an den Pfosten jeweils zwischen dem unteren und dem oberen Gelenkbereich gelenkig angebunden ist. Gemäß einer solchen Weiterbildung der Vorrichtung sind die Pfosten durch eine Querstrebe miteinander verbunden, welche sich in Fahrtrichtung des Schienenfahrzeugs, beispielsweise in Ausführung eines Bleches, länglich erstreckt. Die Anschlussbereiche der Querstrebe an den Pfosten zwischen den oberen und unteren Gelenkbereichen der Pfosten sind jeweils in der Art eines Gelenkes ausgeführt, wobei die zugehörigen gebildeten Gelenkachsen parallel zu den Schwenkachsen der oberen und unteren Gelenkbereiche verlaufen.

Die zweite Anbindungskomponente kann ein Führungselement aufweisen, das als eine längliche Ausnehmung an der Querstrebe ausgebildet ist. Die beschriebene Linearführung kann daher auch unterhalb der Tischplatte eingerichtet sein. Eine entsprechende Anbindung eines Lenkerelements kann ebenso unterhalb der Tischplatte angeordnet sein mit einer Seitenwandanbindung und einer Querstrebe zwischen den Pfosten zusammenwirken. Mittels einer Anordnung einer Längsführung an einer Zwischenstrebe oder Querstrebe zwischen den Pfosten kann ein Verfahrweg abhängig von einem Hebelverhältnis gegenüber der Bewegung der Tischplatte reduziert werden.

Gemäß einer weiteren bevorzugten Weiterbildung der Vorrichtung ist der obere Gelenkbereich so ausgebildet und angeordnet, dass er sich zwischen einer Oberseite und einer Unterseite der Tischplatte erstreckt. Auf diese Weise kann ein besonders platzsparender Aufbau der Vorrichtung realisiert werden, welcher zu einer komfortablen Beinfreiheit für Fahrzeuggäste beiträgt. Auch bei einer besonders stabilen Ausgestaltung des oberen Gelenkbereichs des Pfostens im Vergleich zu einem deutlich schmaleren unteren Gelenkbereich kann ein stabiler, sicherer und komfortabler Aufbau der Vorrichtung ausgebildet werden.

Der obere Gelenkbereich kann sich auch aus einer Tischebene heraus nach unten erstrecken und über die Unterseite der Tischplatte in Richtung Boden des Schienenfahrzeugs ragen. Der Platzbedarf nahe unterhalb der Tischplatte trägt in der Regel nur geringfügig zu einer angenehmen Sitzposition eines Fahrgastes bei. Eine relativ großflächige Anordnung des oberen Gelenkbereichs an der Unterseite der Tischplatte ist ebenfalls möglich. Bevorzugt weist die Tischplatte aber eine oder mehrere Ausnehmungen oder Aussparungen auf, welche für den oberen Gelenkbereich des jeweiligen Pfostens ausgebildet sind. Auf diese Weise kann auch ein bündiger Abschluss zwischen einer Unterseite der oberen Gelenkbereichs und der Unterseite der Tischplatte eingerichtet werden.

Gemäß einer weiteren Weiterbildung der Vorrichtung bilden die oberen und unteren Gelenkbereiche jeweilige Sollknickstellen aus, die jeweils in Bereichen der beiden der Tischplatte und der Seitenwand benachbarten Enden der Pfosten vorgesehen sind. Unter Sollknickstellen sind echte und unechte Gelenke zu verstehen, die ein Abwinkeln der Pfosten aus ihrer gestreckten Ausrichtung ermöglichen.

Gemäß einer weiteren Weiterbildung umfasst die Vorrichtung eine Tragstruktur, welche die zweite Anbindungskomponente mit den Pfosten der ersten Anbindungskomponenten koppelt und eine erste Seitenwandanbindung ausbildet. Auf diese Weise kann eine gemeinsame Tragstruktur eine zusätzliche Anbindung in Form eines abstützenden Getriebes ausbilden, das nicht direkt an der Seitenwand sondern mittels der Pfosten an der Seitenwand befestigt ist. Die gemeinsame Tragstruktur kann als ein flaches Blech ausgebildet sein, welches sich im Wesentlichen in einer vertikalen bzw. aufrechten Ebene erstreckt und eine Anbindung der Pfosten und der zusätzlichen zweiten Anbindungskomponente ermöglicht. Die Tragstruktur kann dabei einteilig oder mehrteilig ausgeführt sein und zum Beispiel ein Führungselement für ein Zusammenwirken mit einer eingreifenden Struktur mit ausbilden.

Die Schwenkachsen der oberen und unteren Gelenkbereiche der Pfosten können so gegeneinander gedreht sein, dass sie sich in einer vertikalen Drehachse schneiden, die bezogen auf eine Querrichtung quer zu der Seitenwand näher an einer Fahrzeugmitte des Schienenfahrzeugs liegt als an der Seitenwand. Eine solche Ausgestaltung berücksichtigt die Dimensionierung der Tischplatte und voraussichtliche Auftreffpunkte von Fahrgästen auf die Tischplatte. Die Schwenkachsen der Gelenkbereiche sind so gegeneinander gekippt, dass sich ihr Schnittpunkt an einer Position befindet, die sich annähernd vor dem Aufprallpunkt des weiter von der Seitenwand entfernt sitzenden Fahrgastes befindet. Mit der Ausbildung einer solchen virtuellen Drehachse können die Verformungseigenschaften der vor dieser Drehachse liegenden Aufprallpositionen weitgehend unabhängig von denen der näher an der Seitenwand liegenden Aufprallpositionen eingestellt werden.

Mittels der beschriebenen Vorrichtungen sind vorgabenerfüllende, crashgerechte Lösungen realisierbar, die zu einer erhöhten Sicherheit beitragen und auch auf relativ schmale Tische skalierbar sind.

Gemäß einem weiteren Aspekt der Erfindung umfasst ein Schienenfahrzeug eine Ausgestaltung einer der zuvor beschriebenen Vorrichtungen zum Anbinden eines Tisches an eine Seitenwand des Schienenfahrzeugs, die mittels der ersten Anbindungskomponente mit der Seitenwand und mittels der zweiten Anbindungskomponente mit der Seitenwand und/oder mit dem Boden eines Wagenkastens des Schienenfahrzeugs gekoppelt ist. Die Vorrichtung dient insbesondere zum Anbinden eines Tisches für eine quer zur Fahrtrichtung angeordnete Sitzgruppe. Dadurch, dass das Schienenfahrzeug, eine Ausgestaltung der zuvor beschriebenen Vorrichtung umfasst, sind beschriebene Eigenschaften und Merkmale der Vorrichtung auch für das Schienenfahrzeug offenbart und umgekehrt.

Ausführungsbeispiele der Erfindung sind im Folgenden anhand der schematischen Zeichnungen näher erläutert. Es zeigen:
- Figur 1: eine schematische Darstellung eines Schienenfahrzeugs mit einer Vorrichtung zum Anbinden eines Tisches an eine Seitenwand des Schienenfahrzeugs,
- Figur 2: ein Ausführungsbeispiel der Vorrichtung zum Anbinden eines Tisches an eine Seitenwand des Schienenfahrzeugs,
- Figur 3: ein weiteres Ausführungsbeispiel der Vorrichtung zum Anbinden eines Tisches an eine Seitenwand des Schienenfahrzeugs,
- Figur 4: ein weiteres Ausführungsbeispiel der Vorrichtung zum Anbinden eines Tisches an eine Seitenwand des Schienenfahrzeugs, und
- Figur 5: ein weiteres Ausführungsbeispiel der Vorrichtung zum Anbinden eines Tisches an eine Seitenwand des Schienenfahrzeugs.

Elemente gleicher Konstruktion und Funktion sind figurenübergreifend mit denselben Bezugszeichen gekennzeichnet. Aus Gründen der Übersichtlichkeit sind gegebenenfalls nicht alle Elemente in sämtlichen Figuren mit zugehörigen Bezugszeichen gekennzeichnet.

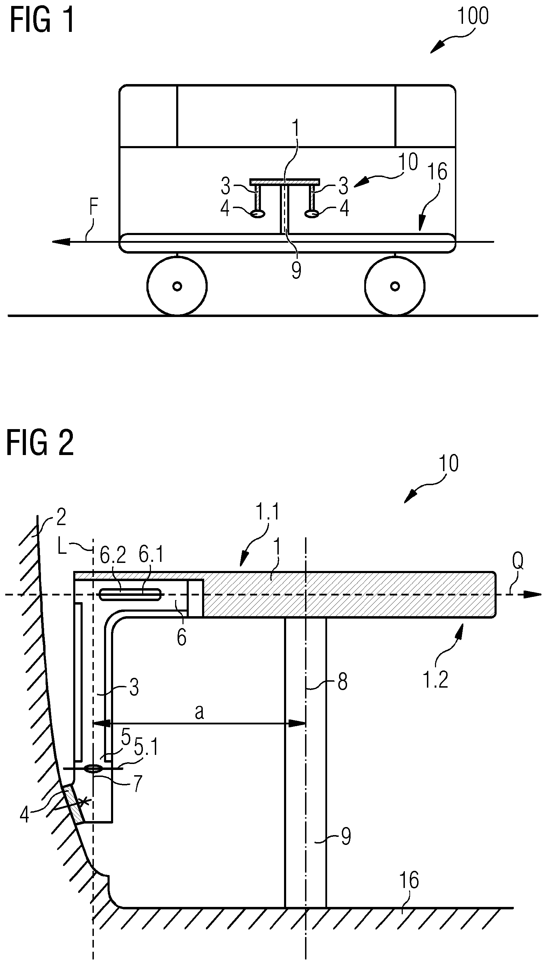

Figur 1 zeigt in einer schematischen Seitenansicht ein Schienenfahrzeug 100 mit einer Vorrichtung 10 zum Anbinden eines Tisches an eine Seitenwand 2 des Schienenfahrzeugs 100. Wie nachfolgend anhand der Figuren 2 bis 5 erläutert wird, stellt die Vorrichtung 10 eine sichere und zuverlässige Stützstruktur bereit, welche insbesondere eine Verletzungsgefahr für Fahrgäste in einem Betrieb des Schienenfahrzeugs 100 gering hält.

Die Vorrichtung 10 weist eine Tischplatte 1, eine erste Anbindungskomponente 3, 5, 6 und eine zweite Anbindungskomponente 9, 11, 12, 14, 15 auf. Die erste Anbindungskomponente 3, 5, 6 bildet eine Stützstruktur unterhalb einer Oberseite 1.1 der Tischplatte 1 aus, deren oberes Ende an der Tischplatte 1 befestigt ist und deren unteres Ende mittels einer ersten Seitenwandanbindung 4 an der Seitenwand 2 des Schienenfahrzeugs 100 befestigt ist (s.a. Figur 2).

Begriffe, wie "oben", "unten", "Oberseite", "Unterseite", "Fahrtrichtung", "Querrichtung", beziehen sich auf eine Ausrichtung der Vorrichtung 10 hinsichtlich eines betriebsgemäß angeordneten und einsatzbereiten Zustands an der Seitenwand 2 des Schienenfahrzeugs 100. Somit erstreckt sich die Tischplatte 1 im Wesentlichen in einer horizontalen Ebene quer zu der Seitenwand 2 und parallel zu einem Boden 16 des Schienenfahrzeugs 100.

Die erste Anbindungskomponente umfasst zwei Pfosten 3, die aufrecht voneinander beabstandet angeordnet sind und jeweils einen unteren, ersten Gelenkbereich 5 und einen oberen, zweiten Gelenkbereich 6 aufweisen, die um eine jeweilige Schwenkachse 5.1, 6.1 verschwenkbar sind. Die zweite Anbindungskomponente ist beabstandet von der ersten Anbindungskomponente an der Tischplatte 1 befestigt und dazu ausgebildet, die Tischplatte 1 mit der Seitenwand 2 und/oder dem Boden 16 zu koppeln, sodass bezogen auf einen an der Seitenwand 2 angeordneten Zustand der Vorrichtung 10 bei einem Auftreten einer in Fahrtrichtung F des Schienenfahrzeugs 100 auf die Tischplatte 1 wirkenden Kraft ein Drehmoment mittels der ersten Anbindungskomponente und der zweiten Anbindungskomponente unabhängig voneinander an die Seitenwand 2 und/oder den Boden 16 überleitbar ist.

Figur 2 zeigt ein Ausführungsbeispiel der Vorrichtung 10 in einer schematischen Schnittdarstellung mit Blick in Fahrtrichtung F. Die Schwenkachsen 5.1, 6.1 sind bezogen auf einen an der Seitenwand 2 angeordneten Zustand der Vorrichtung 10 quer zu der Fahrtrichtung F bzw. entlang einer Querrichtung Q des Schienenfahrzeugs 100 orientiert. Die Pfosten 3 sind bezogen auf eine jeweilige Längsachse L an den jeweiligen unteren Gelenkbereichen 5 schmaler ausgeführt als an den oberen Gelenkbereichen 6. Die zweite Anbindungskomponente umfasst ein Tischbein 9, das beabstandet von der ersten Anbindungskomponente aufrecht angeordnet an der Tischplatte 1 befestigt ist und dazu ausgebildet ist, die Tischplatte 1 mit einem Boden 16 des Schienenfahrzeugs 100 zu koppeln.

Mittels der zweiten Anbindungskomponente ist zusätzlich zu den beiden Pfosten 3 eine weitere Anbindung der Tischplatte 1 vorhanden, die in einer Querebene des Schienenfahrzeugs 100 eine Kraft aufbringen bzw. aufnehmen kann, deren Anbindungswirklinie 8 zu einer Verbindungsgeraden 7 der beiden unteren Gelenkbereiche 5 der Pfosten 3 beabstandet ist. Anders formuliert ist zwischen der gedachten Verbindungsgeraden 7 zwischen den beiden unteren Gelenkbereichen 5 der Pfosten 3 und der Anbindungswirklinie 8 des Tischbeins 9 bzw. der zweiten Anbindungskomponente ein Abstand a ausgebildet. Eine solche Einführung und Anordnung einer zusätzlichen Abstützung ermöglicht es, eine Drehmomentbeanspruchung der unteren Anbindungen der Pfosten 3 an den unteren Gelenkbereichen 5 so zu reduzieren, dass diese deutlich schmaler oder schlanker ausgeführt werden können als die Anbindungen der Pfosten 3 an den oberen Gelenkbereichen 6.

Gemäß dem Ausführungsbeispiel nach Figur 2 sind die unteren Gelenkbereich 5 bezogen auf die Längsachse L wesentlich schlanker ausgebildet als die oberen Gelenkbereiche 6. Die Pfosten 3 sind an den unteren Gelenkbereichen 5 mittels einer ersten Seitenwandanbindung 4 mit der Seitenwand 2 gekoppelt. Der jeweilige obere Gelenkbereich 6 ist innerhalb der Tischebene bzw. zwischen der Oberseite 1.1 und der Unterseite 1.2 der Tischplatte 1 angeordnet und zum Beispiel so ausgebildet, dass eine Unterseite des oberen Gelenkbereichs 6 bündig mit der Unterseite 1.2 der Tischplatte ist.

Mittelstücke der Pfosten 3 sowie die unteren Gelenkbereiche 5 sind zum Beispiel zylinder- oder rohrförmig ausgebildet, während die oberen Gelenkbereiche 6 eine quaderähnliche Form aufweisen. Zudem weisen die oberen Gelenkbereiche 6 jeweils eine Ausnehmung 6.2 auf, die sich zum Beispiel durch den jeweiligen Gelenkbereich 6 in Fahrtrichtung F erstreckt. In Figur 2 ist die Ausnehmung 6.2 als elliptische oder ellipsoide Aussparung illustriert. Die Ausnehmung 6.2. trägt unter anderem zur Stabilität der Stützstruktur und somit zu einer nutzbringenden Funktionalität der Vorrichtung 10 bei.

Dadurch, dass die oberen Gelenkbereiche 6 deutlich stabiler ausgebildet sind als die unteren Gelenkbereiche 5, nehmen die oberen Anbindungen der Pfosten 3 überwiegend oder vollständig die sich aus den Kräften in Querrichtung Q des Schienenfahrzeugs 100 ergebenden Versatzmomente auf. Eine entsprechend tragfähige und stabile Dimensionierung der oberen Gelenkbereiche 6 im Bereich der Tischplatte 1 kann insbesondere an der Unterseite 1.2 der Tischplatte 1 oder, wie in Figur 2, in die Tischplatte 1 integriert sein, sodass ein zur Verfügung stehender Beinfreiraum nicht eingeschränkt wird.

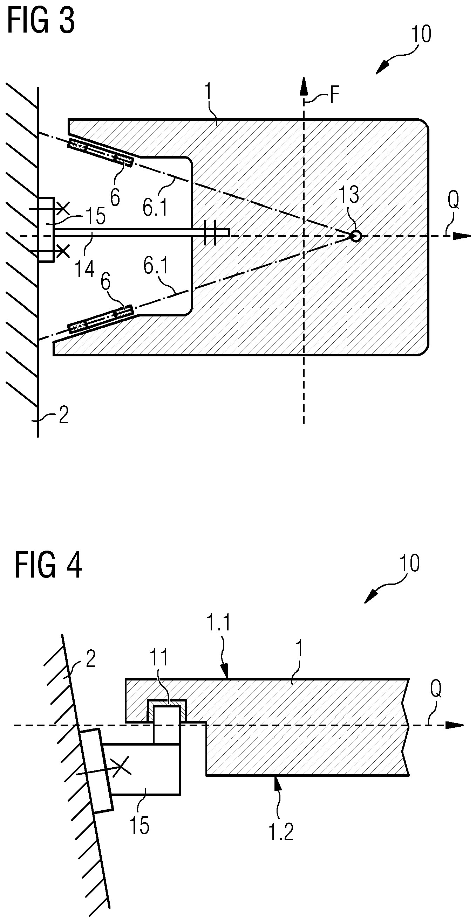

In Figur 3 ist in einer Aufsicht ein weiteres Ausführungsbeispiel der Vorrichtung 10 schematisch illustriert. Die weitere Anbindung in Ausführung der zweiten Anbindungskomponente ist als ein in Fahrtrichtung F bewegliches Getriebe ausgebildet. Die zweite Anbindungskomponente umfasst ein Lenkerelement 14, das in oder nahe der Tischplatte 1 zwischen dieser und der Seitenwand 2 verläuft. Das Lenkerelement 14 ist zum Beispiel als Blech mit vorgegebenen Knickstellen und/oder Versteifungen ausgestaltet und einerseits mittels einer zweiten Seitenwandanbindung 15 mit der Seitenwand 2 und andererseits mit der Tischplatte 1 gekoppelt. Die dargestellte Aussparung der Tischplatte 1 ist nicht zwingend auszubilden und dient vorliegend vielmehr der übersichtlichen Illustration der dargestellten Elemente der Vorrichtung 10.

Die Schwenkachsen 5.1 und 6.1 der Gelenkbereiche 5 und 6 sind so gegeneinander gekippt, dass sie sich auf einer ideellen Drehachse 13 schneiden. Diese virtuelle Drehachse 13 bzw. ihr Schnittpunkt mit der Tischplatte ist so gewählt, dass sie sich annähernd vor dem Aufprallpunkt des weiter von der Seitenwand 2 entfernt sitzenden Fahrgastes befindet. Mit der Ausbildung der so positionierten Drehachse 13 können die Verformungseigenschaften der davor angeordneten Aufprallpositionen weitgehend unabhängig von denen der näher an der Seitenwand 2 liegenden Aufprallpositionen eingestellt werden.

In Figur 4 ist ein weiteres Ausführungsbeispiel der Vorrichtung 10 in einer schematischen Seitenansicht mit Blick in Fahrtrichtung F gezeigt. Die zweite Anbindungskomponente kann als abstützendes Getriebe gemäß diesem Ausführungsbeispiel auch eine Linearführung ausbilden. Ein Führungselement 11 ist zum Beispiel in Ausgestaltung einer Ausnehmung an der Unterseite 1.2 der Tischplatte 1 ausgebildet, in die ein Haken oder vorspringender Bereich der zweiten Seitenwandanbindung 15 eingreift. Das lineare Führungselement 11 erstreckt sich in Fahrtrichtung F zum Beispiel an der Unterseite 1.2 durch die gesamte Breite der Tischplatte 1. Innerhalb der Ausnehmung und/oder an dem nach oben gerichteten Hakenelement der zweiten Seitenwandanbindung 15 kann ferner einer Beschichtung vorgesehen sein, die ein zuverlässiges und gleitendes Führen der Tischplatte 1 relativ zu der Seitenwand 2 ermöglicht.

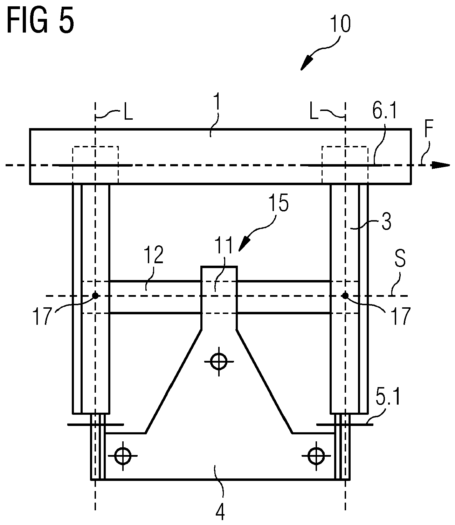

Gemäß einer weiteren Ausführungsform kann eine solche Linearführung und/oder ein Lenkerelement 14 auch mit einer horizontalen Traverse oder Querstrebe 12 zusammenwirken, die unterhalb der Tischplatte 1 an den Pfosten 3 jeweils zwischen dem unteren und dem oberen Gelenkbereich 5 und 6 gelenkig angebunden ist. In Figur 5 ist eine solche mögliche Ausführungsform schematisch dargestellt. Die Querstrebe 12 ist zum Beispiel als Blech ausgestaltet, das eine Längsachse S aufweist. An den Schnittstellen der Längsachse S der Querstrebe 12 und der Längsachsen L der jeweiligen Pfosten 3 ist die Querstrebe 12 gelenkig mit den Pfosten 3 gekoppelt und ermöglicht somit eine Scherbewegung der Tischplatte 1 beispielsweise im Falle einer Kollision des Schienenfahrzeugs 100.

Das gezeigte Ausführungsbeispiel der Vorrichtung 10 in Figur 5 entspricht einer Ansicht von vorne auf die Tischplatte 1 und die Seitenwand 2. Die erste Seitenwandanbindung 4 kann als gemeinsame Tragstruktur so ausgebildet sein, dass sie die zweite Anbindungskomponente, zum Beispiel in Ausführung eines Führungselements 11, das mit der zweiten Seitenwandanbindung 15 zusammenwirkt, bereitstellt. Die gemeinsame Tragstruktur kann alternativ oder zusätzlich mit einem Lenkerelement 14 ausgebildet sein bzw. auf eine Anordnung eines solchen eingerichtet sein. Außerdem können, wie in Figur 5 illustriert, Kopplungsöffnungen oder Kopplungsstiftelemente vorgesehen sein, die ein einfaches und stabiles Befestigen der ersten Seitenwandanbindung 4 an den Pfosten 3 und/oder der Seitenwand 2 ermöglichen.

Mittels der beschriebenen Vorrichtungen 10 ist jeweils eine sichere und zuverlässige Stützstruktur zur Seitenwandanbindung eines Tisches für eine quer zur Fahrtrichtung F angeordnete Sitzgruppe des Schienenfahrzeugs 100 realisierbar, die mit hoher Stabilität die Verletzungsgefahr der Fahrgäste im Betrieb, insbesondere bei Kollisionen, deutlich vermindert, ohne dass Komforteinbußen hingenommen werden müssen. Die Vorrichtungen 10 sind gemäß ihrem jeweiligen Aufbau so ausgebildet, dass Kräfte bzw. Drehmomente, die auf den Tisch bzw. an der Tischplatte 1 wirken, durch die beiden Anbindungskomponenten zuverlässig aufgenommen und sicher abgeleitet werden.

## Patentansprüche

1. Vorrichtung (10) zum Anbinden eines Tisches an eine Seitenwand (2) eines Schienenfahrzeugs (100), aufweisend:
- eine Tischplatte (1),
- eine erste Anbindungskomponente (3, 5, 6), die als Stützstruktur unterhalb einer Oberseite (1.1) der Tischplatte (1) angeordnet ist und deren oberes Ende an der Tischplatte (1) befestigt ist und deren unteres Ende an der Seitenwand (2) des Schienenfahrzeugs (100) befestigbar ist, wobei die erste Anbindungskomponente (3, 5, 6) zwei Pfosten (3) umfasst, die aufrecht voneinander beabstandet angeordnet sind und jeweils einen unteren, ersten Gelenkbereich (5) und einen oberen, zweiten Gelenkbereich (6) aufweisen, die um eine jeweilige Schwenkachse (5.1, 6.1) verschwenkbar sind, welche bezogen auf einen an der Seitenwand (2) angeordneten Zustand der Vorrichtung (10) jeweils quer zu einer Fahrtrichtung (F) des Schienenfahrzeugs (100) orientiert sind, wobei Schwenkachsen (5.1, 6.1) der oberen und unteren Gelenkbereiche (5, 6) der Pfosten (3) so gegeneinander gedreht sind, dass sie sich in einer vertikalen Drehachse (13) schneiden, die bezogen auf eine Querrichtung (Q) quer zu der Seitenwand (2) näher an einer Fahrzeugmitte des Schienenfahrzeugs (100) liegt als an der Seitenwand (2), und
- eine zweite Anbindungskomponente (11, 12, 14, 15), die beabstandet von der ersten Anbindungskomponente (3, 5, 6) an der Tischplatte (1) befestigt ist **dadurch gekennzeichnet, dass** diese zweite Anbindungskomponente dazu ausgebildet ist, die Tischplatte (1) mit der Seitenwand (2) zu koppeln, sodass bezogen auf einen an der Seitenwand (2) angeordneten Zustand der Vorrichtung (10) bei einem Auftreten einer in Fahrtrichtung (F) des Schienenfahrzeugs (100) auf die Tischplatte (1) wirkenden Kraft ein Drehmoment mittels der ersten Anbindungskomponente (3, 5, 6) und der zweiten Anbindungskomponente (11, 12, 14, 15) unabhängig voneinander an die Seitenwand (2) überleitbar ist,
wobei bezogen auf eine jeweilige Längsachse (L) der Pfosten (3) die jeweiligen unteren Gelenkbereiche (5) schmaler ausgeführt sind als die oberen Gelenkbereiche (6).

2. Vorrichtung (10) zum Anbinden eines Tisches an eine Seitenwand (2) eines Schienenfahrzeugs (100), aufweisend:
- eine Tischplatte (1),
- eine erste Anbindungskomponente (3, 5, 6), die als Stützstruktur unterhalb einer Oberseite (1.1) der Tischplatte (1) angeordnet ist und deren oberes Ende an der Tischplatte (1) befestigt ist und deren unteres Ende an der Seitenwand (2) des Schienenfahrzeugs (100) befestigbar ist, wobei die erste Anbindungskomponente (3, 5, 6) zwei Pfosten (3) umfasst, die aufrecht voneinander beabstandet angeordnet sind und jeweils einen unteren Gelenkbereich (5) und einen oberen Gelenkbereich (6) aufweisen, die um eine jeweilige Schwenkachse (5.1, 6.1) verschwenkbar sind, welche bezogen auf einen an der Seitenwand (2) angeordneten Zustand der Vorrichtung (10) quer zu einer Fahrtrichtung (F) des Schienenfahrzeugs (100) orientiert sind, und
- eine zweite Anbindungskomponente, die ein Tischbein (9) umfasst, das beabstandet von der ersten Anbindungskomponente (3, 5, 6) aufrecht angeordnet an der Tischplatte (1) befestigt ist und dazu ausgebildet ist, die Tischplatte (1) mit einem Boden (16) des Schienenfahrzeugs (100) zu koppeln, **dadurch gekennzeichnet, dass** eine Anbindungswirklinie (8) des Tischbeins (9) zu einer Verbindungsgeraden (7) der beiden unteren Gelenkbereiche (5) der Pfosten (3) derart beabstandet ist, dass bezogen auf einen an der Seitenwand (2) angeordneten Zustand der Vorrichtung (10) bei einem Auftreten einer in Fahrtrichtung (F) des Schienenfahrzeugs (100) auf die Tischplatte (1) wirkenden Kraft ein Drehmoment mittels der ersten Anbindungskomponente (3, 5, 6) und der zweiten Anbindungskomponente (9) unabhängig voneinander an die Seitenwand (2) und den Boden (16) überleitbar ist,
wobei bezogen auf eine jeweilige Längsachse (L) der Pfosten (3) die jeweiligen unteren Gelenkbereiche (5) schmaler ausgeführt sind als die oberen Gelenkbereiche (6).

3. Vorrichtung (10) nach Anspruch 1, bei der die zweite Anbindungskomponente ein Lenkerelement (14) aufweist, das dazu eingerichtet ist, die Tischplatte (1) gelenkig mit der Seitenwand (2) zu koppeln.

4. Vorrichtung (10) nach Anspruch 3, bei der das Lenkerelement (14) in Form eines Bleches mit einer oder mehreren Knicklinien und/oder Versteifungen ausgebildet ist.

5. Vorrichtung (10) nach einem der Ansprüche 1, 3 oder 4, bei der die zweite Anbindungskomponente ein Führungselement (11) aufweist, das dazu eingerichtet ist, im Zusammenwirken mit einer zweiten Seitenwandanbindung (15) an der Seitenwand (2) eine Linearführung der Tischplatte (1) relativ zu der Seitenwand (2) auszubilden.

6. Vorrichtung (10) nach Anspruch 5, das Führungselement (11) als eine längliche Ausnehmung an der Tischplatte (1) ausgebildet ist, die zur Aufnahme eines vorspringenden Bereichs der zweiten Seitenwandanbindung (15) eingerichtet ist.

7. Vorrichtung (10) nach einem der Ansprüche 1 bis 6, bei der der obere Gelenkbereich (6) zwischen einer Oberseite (1.1) und einer Unterseite (1.2) der Tischplatte (1) angeordnet ist.

8. Vorrichtung (10) nach einem der Ansprüche 1 bis 7, bei der die oberen und unteren Gelenkbereiche (5, 6) jeweilige Sollknickstellen ausbilden, die jeweils in Bereichen der beiden der Tischplatte (1) und der Seitenwand (2) benachbarten Enden der Pfosten (3) vorgesehen sind.

9. Vorrichtung (10) nach einem der Ansprüche 1 oder 3 bis 8, bei der die Pfosten (3) durch eine Querstrebe (12) miteinander verbunden sind, welche sich in Fahrtrichtung (F) des Schienenfahrzeugs (100) länglich erstreckt, wobei Anschlussbereiche (17) der Querstrebe (12) an den Pfosten (3) zwischen den oberen und unteren Gelenkbereichen (5, 6) der Pfosten (3) jeweils in der Art eines Gelenkes ausgeführt sind und die zugehörigen gebildeten Gelenkachsen parallel zu den Schwenkachsen (5.1, 6.1) der oberen und unteren Gelenkbereiche (5, 6) verlaufen.

10. Vorrichtung (10) nach Anspruch 9, bei der die zweite Anbindungskomponente ein Führungselement (11) aufweist, das dazu eingerichtet ist, im Zusammenwirken mit einer zweiten Seitenwandanbindung (15) an der Seitenwand (2) eine Linearführung der Tischplatte (1) relativ zu der Seitenwand (2) auszubilden, wobei das Führungselement (11) als eine längliche Ausnehmung an der Querstrebe (12) ausgebildet ist, die zur Aufnahme eines vorspringenden Bereichs der zweiten Seitenwandanbindung (15) eingerichtet ist.

11. Vorrichtung (10) nach einem der Ansprüche 1 bis 10, umfassend:
eine Tragstruktur (4), welche die zweite Anbindungskomponente (11, 12, 14, 15) mit den Pfosten (3) der ersten Anbindungskomponenten (3, 5, 6) koppelt und eine erste Seitenwandanbindung ausbildet.

12. Schienenfahrzeug (100), umfassend:
- eine Seitenwand (2) und einen Boden (16), und
- eine Vorrichtung (10) nach einem der Ansprüche 1 bis 11, die mittels der ersten Anbindungskomponente (3, 5, 6) mit der Seitenwand (2) und mittels der zweiten Anbindungskomponente (9, 11, 12, 14, 15) mit der Seitenwand (2) und/oder mit dem Boden (16) gekoppelt ist.

## Claims

1. Apparatus (10) for connecting a table to a side wall (2) of a rail vehicle (100), having:
- a table top (1),
- a first connection component (3, 5, 6), which is arranged underneath an upper side (1.1) of the table top (1) as a supporting structure and the upper end of which is fixed to the table top (1) and the lower end of which is fixed to the side wall (2) of the rail vehicle (100), wherein the first connection component (3, 5, 6) comprises two posts (3) which are arranged upright at a distance from each other and each have a lower, first joint region (5) and an upper, second joint region (6), which can be pivoted about a respective pivot axis (5.1, 6.1) and which, in relation to a state of the apparatus (10) arranged on the side wall (2), are each oriented transversely to a direction of travel (F) of the rail vehicle (100), wherein pivot axes (5.1, 6.1) of the upper and lower joint regions (5, 6) of the posts (3) are rotated relative to each other such that they intersect in a vertical axis of rotation (13) which, in relation to a transverse direction (Q) transverse to the side wall (2), is located closer to a vehicle centre of the rail vehicle (100) than to the side wall (2),
and
- a second connection component (11, 12, 14, 15), which is fixed to the table top (1) at a distance from the first connection component (3, 5, 6),
**characterized in that** this second connection component is designed to couple the table top (1) to the side wall (2) so that, in relation to a state of the apparatus (10) arranged on the side wall (2), in the event of an occurrence of a force acting on the table top (1) in the direction of travel (F) of the rail vehicle (100), a torque can be transmitted to the side wall (2) by means of the first connection component (3, 5, 6) and the second connection component (11, 12, 14, 15), independently of each other, wherein, in relation to a respective longitudinal axis (L) of the posts (3), the respective lower joint regions (5) are designed to be narrower than the upper joint regions (6).

2. Apparatus (10) for connecting a table to a side wall (2) of a rail vehicle (100), having:
- a table top (1),
- a first connection component (3, 5, 6), which is arranged underneath an upper side (1.1) of the table top (1) as a supporting structure and the upper end of which is fixed to the table top (1) and the lower end of which is fixed to the side wall (2) of the rail vehicle (100), wherein the first connection component (3, 5, 6) comprises two posts (3) which are arranged upright at a distance from each other and each have a lower joint region (5) and an upper joint region (6), which can be pivoted about a respective pivot axis (5.1, 6.1) and which, in relation to a state of the apparatus (10) arranged on the side wall (2), are oriented transversely to a direction of travel (F) of the rail vehicle (100),
and
- a second connection component, which comprises a table leg (9), which is fixed to the table top (1) upright at a distance from the first connection component (3, 5, 6) and is designed to couple the table top (1) to a floor (16) of the rail vehicle (100),
**characterized in that** a connection line of action (8) of the table leg (9) is spaced apart from a connecting straight line (7) of the two lower joint regions (5) of the posts (3) in such a way that, in relation to a state of the apparatus (10) arranged on the side wall (2), in the event of an occurrence of a force acting on the table top (1) in the direction of travel (F) of the rail vehicle (100), a torque can be transmitted to the side wall (2) and to the floor (16) by means of the first connection component (3, 5, 6) and the second connection component (9), independently of each other, wherein, in relation to a respective longitudinal axis (L) of the posts (3), the respective lower joint regions (5) are designed to be narrower than the upper joint regions (6).

3. Apparatus (10) according to Claim 1, in which the second connection component has a link element (14), which is configured so as to couple the table top (1) to the side wall (2) in an articulated manner.

4. Apparatus (10) according to Claim 3, in which the link element (14) is designed in the form of a metal sheet with one or more fold lines and/or reinforcements.

5. Apparatus (10) according to one of Claims 1, 3 or 4, in which the second connection component has a guide element (11), which is configured to form a linear guide of the table top (1) relative to the side wall (2) in interaction with a second side wall connection (15) on the side wall (2).

6. Apparatus (10) according to Claim 5, in which the guide element (11) is designed as an elongated recess on the table top (1), which is configured to accommodate a protruding region of the second side wall connection (15).

7. Apparatus (10) according to one of Claims 1 to 6, in which the upper joint region (6) is arranged between an upper side (1.1) and an underside (1.2) of the table top (1).

8. Apparatus (10) according to one of Claims 1 to 7, in which the upper and lower joint regions (5, 6) form respective predetermined buckling points, which are each provided in regions of the two ends of the posts (3) that are adjacent to the table top (1) and the side wall (2).

9. Apparatus (10) according to one of Claims 1 or 3 to 8, in which the posts (3) are connected to each other by a transverse strut (12), which extends in elongated form in the direction of travel (F) of the rail vehicle (100), wherein connection regions (17) of the transverse strut (12) to the posts (3) between the upper and lower joint regions (5, 6) of the posts (3) are each designed in the manner of a joint, and the associated joint axes that are formed run parallel to the pivot axes (5.1, 6.1) of the upper and lower joint regions (5, 6).

10. Apparatus (10) according to Claim 9, in which the second connection component has a guide element (11), which is configured to form a linear guide of the table top (1) relative to the side wall (2) in interaction with a second side wall connection (15) on the side wall (2), wherein the guide element (11) is formed as an elongated recess on the transverse strut (12), which is configured to accommodate a protruding region of the second side wall connection (15).

11. Apparatus (10) according to one of Claims 1 to 10, comprising:
a supporting structure (4), which couples the second connection component (11, 12, 14, 15) with the posts (3) of the first connection components (3, 5, 6) and forms a first side wall connection.

12. Rail vehicle (100), comprising:
- a side wall (2) and a floor (16), and
- an apparatus (10) according to one of Claims 1 to 11, which is coupled to the side wall (2) by means of the first connection component (3, 5, 6) and to the side wall (2) and/or to the floor (16) by means of the second connection component (9, 11, 12, 14, 15) .

## Revendications

1. Dispositif (10) pour relier une table à une paroi (2) latérale d'un véhicule (100) ferroviaire, comportant :
- un plateau (1) de table,
- un premier élément (3, 5, 6) de liaison, qui, en tant que structure d'appui, est monté en-dessous d'une face (1.1) supérieure du plateau (1) de la table et dont l'extrémité supérieure est fixée au plateau (1) de table et dont l'extrémité inférieure peut être fixée à une paroi (2) latérale du véhicule (100) ferroviaire, dans lequel le premier élément (3, 5, 6) de liaison comprend deux montants (3), qui sont disposés verticalement à distance l'un de l'autre et qui ont chacun une première partie (5) inférieure d'articulation et une deuxième partie (6) supérieure d'articulation, qui peuvent pivoter autour d'un axe (5.1, 6.1) respectif de pivotement, lesquels sont, rapportés à un état, monté sur la paroi (2) latérale, du dispositif (10), orientés respectivement transversalement à une direction (F) de circulation du véhicule (100) ferroviaire, dans lequel les axes (5.1, 6.1) de pivotement des parties (5, 6) supérieures et inférieures de pivotement des montants (3) sont tournés l'un par rapport à l'autre, de manière à ce qu'ils se coupent dans un axe (13) de rotation vertical, qui, rapporté à une direction (Q) transversale, transversalement à la paroi (2) latérale, est plus près d'un milieu du véhicule (100) ferroviaire que de la paroi (2) latérale,
et
- un deuxième élément (11, 12, 14, 15) de liaison, qui est fixé au plateau (1) de la table, à distance du premier élément (3, 5, 6) de liaison, **caractérisé en ce que** ce deuxième élément de liaison est constitué pour relier le plateau (1) de la paroi de la table à la paroi (2) latérale, de sorte que, rapporté à un état, monté sur la paroi (2) latérale, du dispositif (10), s'il se produit une force s'appliquant au plateau (1) de la table dans la direction (F) de circulation du véhicule (100) ferroviaire, un couple peut, au moyen du premier élément (3, 5, 6) de liaison et du deuxième élément (11, 12, 14, 15) de liaison, être transmis, d'une manière indépendante l'un de l'autre, à la paroi (2) latérale,
dans lequel, rapporté à un axe (L) longitudinal respectif des montants (3), les parties (5) inférieures d'articulation respectives sont plus étroites que les parties (6) supérieures d'articulation.

2. Dispositif (10) pour relier une table à une paroi (2) latérale d'un véhicule (100) ferroviaire, comportant :
- un plateau (1) de table,
- un premier élément (3, 5, 6) de liaison, qui, en tant que structure d'appui, est monté en-dessous d'une face (1.1) supérieure du plateau (1) de la table et dont l'extrémité supérieure est fixée au plateau (1) de table et dont l'extrémité inférieure peut être fixée à une paroi (2) latérale du véhicule (100) ferroviaire, dans lequel le premier élément (3, 5, 6) de liaison comprend deux montants (3), qui sont disposés verticalement à distance l'un de l'autre et qui ont chacun une première partie (5) inférieure d'articulation et une deuxième partie (6) supérieure d'articulation, qui peuvent pivoter autour d'un axe (5.1, 6.1) respectif de pivotement, lesquels sont, rapportés à un état, monté sur la paroi (2) latérale, du dispositif (10), orientés respectivement transversalement à une direction (F) de circulation du véhicule (100) ferroviaire, dans lequel les axes (5.1, 6.1) de pivotement des parties (5, 6) supérieures et inférieures de pivotement des montants (3) sont tournés l'un par rapport à l'autre, de manière à ce qu'ils se coupent dans un axe (13) de rotation vertical, qui, rapporté à une direction (Q) transversale, transversalement à la paroi (2) latérale, est plus près d'un milieu du véhicule (100) ferroviaire que de la paroi (2) latérale,
et
- un deuxième élément de liaison, qui comprend un pied (9) de la table, qui est fixé au plateau (1) de la table en étant disposé verticalement à distance du premier élément (3, 5, 6) de liaison et qui est constitué pour relier le plateau (1) de la table à un plancher (16) du véhicule (100) ferroviaire, **caractérisé en ce qu'**une ligne (8) d'action de liaison du pied (9) de la table est à distance d'une droite (7) de liaison des deux parties (5) inférieures d'articulation des montants (3), de manière à ce que, rapporté à un état, monté sur la paroi (2) latérale, du dispositif (10), s'il se produit une force s'appliquant au plateau (1) de la table dans la direction (F) de circulation du véhicule (100) ferroviaire, un couple peut, au moyen du premier élément (3, 5, 6) de liaison et du deuxième élément (9) de liaison, indépendamment l'un de l'autre, être transmis à la paroi (2) latérale et au plancher (16),
dans lequel, rapporté à un axe (L) longitudinal respectif des montants (3), les parties (5) inférieures d'articulation respectives sont plus étroites que les parties (6) supérieures d'articulation.

3. Dispositif (10) suivant la revendication 1, dans lequel le deuxième élément de liaison a un bras (14), qui est agencé pour articuler le plateau (1) de la table à la paroi (2) latérale.

4. Dispositif (10) suivant la revendication 3, dans lequel le bras (14) est constitué sous la forme d'une tôle ayant une ou plusieurs lignes de coude et/ou des renforts.

5. Dispositif (10) suivant l'une des revendications 1, 3 ou 4, dans lequel le deuxième élément de liaison a un guidage (11), qui est agencé pour, en coopération avec une deuxième liaison (15) latérale, constituer sur la paroi (2) latérale un guidage linéaire du plateau (1) de la table par rapport à la paroi (2) latérale.

6. Dispositif (10) suivant la revendication 5, dans lequel le guidage (11) est constitué sous la forme d'un évidement oblong sur le plateau (1) de la table, qui est agencé pour la réception d'une partie en saillie de la deuxième liaison (15) de paroi latérale.

7. Dispositif (10) suivant l'une des revendications 1 à 6, dans lequel la partie (6) supérieure d'articulation est disposée entre une face (1.1) supérieure et une face (1.2) inférieure du plateau (1) de la table.

8. Dispositif (10) suivant l'une des revendications 1 à 7, dans lequel les parties (5, 6) supérieures et inférieures d'articulation forment respectivement des points destinés à se couder respectifs, qui sont prévus respectivement dans des parties des deux extrémités, voisines du plateau (1) de la table et de la paroi (2) latérale, des montants (3).

9. Dispositif (10) suivant l'une des revendications 1 ou 3 à 8, dans lequel les montants (3) sont reliés entre eux par une traverse (12), qui s'étend en longueur dans la direction (F) de circulation du véhicule (100) ferroviaire, dans lequel des parties (17) de liaison des traverses (12) aux montants (3) sont réalisées entre les parties (5, 6) supérieures et inférieures d'articulation des montants (3) respectivement à la manière d'une articulation, et les axes d'articulation formés, qui leur appartiennent, s'étendent parallèlement aux axes (5.1, 6.1) de pivotement des parties (5, 6) supérieures et inférieures d'articulation.

10. Dispositif (10) suivant la revendication 9, dans lequel le deuxième élément de liaison a un élément (11) de guidage, qui est agencé pour, en coopération avec une deuxième liaison (15) sur la paroi (2) latérale, former un guidage linéaire du plateau (1) de la table par rapport à la paroi (2) latérale, dans lequel l'élément (11) de guidage est constitué sous la forme d'un évidement oblong sur la traverse (12), qui est agencé pour la réception d'une partie en saillie de la deuxième liaison (15) de paroi latérale.

11. Dispositif (10) suivant l'une des revendications 1 à 10, comprenant :
une structure (4) porteuse, qui accouple les deuxièmes éléments (11, 12, 14, 15) de liaison aux montants (3) des premiers éléments (3, 5, 6) de liaison et forme une première liaison de paroi latérale.

12. Véhicule (100) ferroviaire, comprenant :
- une paroi (2) latérale et un plancher (16), et
- un dispositif (10) suivant l'une des revendications 1 à 11, qui est, au moyen des premiers éléments (3, 5, 6) de liaison, relié à la paroi (2) latérale et, au moyen des deuxièmes éléments (9, 11, 12, 14, 15) de liaison, relié à la paroi (2) latérale et/ou au plancher (16).
